# FASCICULE DE BREVET EUROPEEN

(11) **EP 3 976 294 B1**
(45) Date de publication et mention de la délivrance du brevet: **19.07.2023**
(21) Numéro de dépôt: 20726139.7
(22) Date de dépôt: 19.05.2020
(51) Int. Cl.: B33Y 10/00, B33Y 30/00, B29C 64/153, B29C 64/205, B29C 64/329, B29C 64/343, B22F 10/28, B22F 12/50, B22F 12/52, B22F 12/55, B22F 12/90, B22F 10/73

(54) **MACHINE DE FABRICATION ADDITIVE A DISTRIBUTION DE POUDRE PAR TAMISAGE**
GENERATIVE FERTIGUNGSMASCHINE MIT PULVERAUSGABE DURCH SIEBEN
ADDITIVE MANUFACTURING MACHINE WITH POWDER DISPENSING BY SIEVING

(30) Priorité: 24.05.2019 FR 1905467
(43) Date de publication de la demande: 06.04.2022
(73) Titulaire: AddUp, 63118 Cébazat (FR)
(72) Inventeur: JEANNOT, Alexandre, 63118 Cébazat (FR); EFFERNELLI, Albin, 63118 Cébazat (FR); CARLAVAN, Cédric, 63118 Cébazat (FR)
(74) Mandataire: Barascou, Frédéric
(86) Numéro de dépôt international: PCT/EP2020/064000
(87) Numéro de publication internationale: WO 2020/239553

(56) Documents cités:
- WO-A1-95/34468
- WO-A1-2017/194107
- WO-A1-2019/094278
- WO-A1-2019/094278
- US-A1- 2018 133 956

## Description

L'invention est relative à une machine de fabrication additive mettant en oeuvre un procédé de fabrication additive à base de poudre.

Plus précisément, l'invention se situe dans le domaine de la fabrication additive par dépôt de lit de poudre et elle vise à optimiser le dépôt de très faibles quantités de poudre, par exemple 0,5 gramme, sur une zone de travail ayant une petite surface, de 3 à 20 cm² pour donner un ordre d'idées.

La demande WO2017108867 décrit une machine de fabrication additive par dépôt de lit de poudre comprenant un dispositif permettant de déposer un cordon de poudre de profil variable devant le dispositif permettant d'étaler la poudre sur une zone de travail.

Plus en détail, la machine décrite dans la demande WO2017108867 comprend au moins un injecteur pour injecter directement de la poudre sur une surface de travail de la machine, cet injecteur étant mobile par rapport à la surface de travail selon au moins une direction horizontale transversale. De plus, cette machine comprend aussi un système de régulation de la quantité de poudre distribuée par l'injecteur.

Selon cette demande WO2017108867, la régulation de la quantité de poudre distribuée par l'injecteur peut être effectuée en régulant la hauteur de l'injecteur par rapport à la surface de travail. A cet effet, l'injecteur est monté mobile par rapport à la surface de travail selon une direction verticale, et le système de régulation permet de régler la position verticale de l'injecteur par rapport à la surface de travail.

Le système de régulation décrit dans la demande WO2017108867 ne permet pas d'effectuer un dépôt d'une très faible quantité de poudre, de 0,5 gramme par exemple, sur une zone de travail ayant une petite surface, de 3 à 20 cm² par exemple.

Le brevet JP4351218 décrit une machine de fabrication additive comprenant un dispositif de distribution de poudre permettant de déposer un cordon de poudre de profil variable ou discontinu dans la largeur d'une grande zone de travail, et pouvant être adapté à la distribution de poudres ayant différentes granulométries et/ou différentes coulabilités.

A cet effet, le dispositif de distribution de poudre décrit dans le brevet JP4351218 prend la forme d'un réservoir pouvant se translater dans la longueur du dispositif d'étalement de poudre. Et ce réservoir mobile peut être équipé d'un vibrateur et/ou d'un système d'obturation empêchant la distribution de poudre.

Comme le dispositif décrit dans la demande WO2017108867, le dispositif de distribution de poudre décrit dans le brevet JP4351218 ne permet pas d'effectuer un dépôt d'une très faible quantité de poudre, de 0,5 gramme par exemple, sur une zone de travail ayant une petite surface, de 3 à 20 cm² par exemple.

Le document CN103738747 décrit un dispositif de distribution de poudre pour une machine de fabrication additive. Ce dispositif de distribution de poudre prend la forme d'un réservoir mobile équipé de moyens d'obturation et de deux capteurs de mesure des niveaux haut et bas de poudre dans le réservoir.

Les capteurs de niveau décrits dans le document CN103738747 donnent des informations relatives à une quantité maximale ou minimale de poudre présente à l'intérieur du réservoir mobile. Mais, ces capteurs ne permettent pas de mesurer précisément et en temps réel la quantité exacte de poudre déposée devant le dispositif d'étalement de poudre. Donc, ces capteurs ne permettent pas d'effectuer un dépôt d'une très faible quantité de poudre, de 0,5 gramme par exemple, sur une zone de travail ayant une petite surface, de 3 à 20 cm² par exemple.

Le document WO9534468 décrit un dispositif de distribution de poudre comprenant un réservoir principal relié à une trémie d'alimentation en poudre par un conduit flexible. Le réservoir principal est équipé de moyens de mise en vibration et il comporte une ouverture de distribution de poudre munie d'une grille. En complément, le réservoir principal peut être équipé d'un couvercle permettant de refermer l'ouverture de distribution de poudre. Le couvercle peut aussi faire office de réservoir tampon et être équipé d'un capteur permettant de mesurer la quantité de poudre qu'il contient, par exemple en mesurant le poids de cette poudre.

Selon un inconvénient, le document WO9534468 ne décrit pas de moyens permettant de gérer le remplissage du réservoir principal depuis la trémie d'alimentation.

Le document WO2019094278 A1 décrit une machine de fabrication additive avec un dispositif de dépôt de poudre comprenant un réservoir monté sur un capteur de pesage. Le document US 2018/133956 décrit une machine de fabrication additive par dépôt de lit de poudre comprenant un dispositif de dépôt de poudre dans lequel un réservoir est équipé d'un tamis en partie basse et de moyens de mise en vibration.

La présente invention a pour principaux objectifs de permettre le dépôt d'une très faible quantité de poudre, de 0,5 gramme par exemple, sur une zone de travail ayant une petite surface, de 3 à 20 cm² par exemple, et de permettre la gestion du remplissage d'un réservoir utilisé pour la distribution de poudre.

A cet effet, l'invention a pour objet une machine de fabrication additive par dépôt de lit de poudre selon la revendication 1, cette machine de fabrication additive comprenant une zone de travail permettant de recevoir une superposition de différentes couches de poudre, un dispositif de dépôt d'une couche de poudre sur la zone de travail, et une source de consolidation permettant de consolider de manière sélective chaque couche de poudre déposée sur la zone de travail, le dispositif de dépôt d'une couche de poudre comprenant un réservoir de poudre apte à être positionné au-dessus de la zone de travail, et une ouverture de distribution de poudre étant prévue en partie basse du réservoir.

Selon l'invention, le dispositif de dépôt d'une couche de poudre comprend un dispositif vibrant permettant de soumettre le réservoir à des vibrations et l'ouverture de distribution de poudre du réservoir est équipée d'un tamis.

Toujours selon l'invention, le réservoir est monté sur un capteur de pesage.

En associant le tamis à l'utilisation de vibrations, il est possible de distribuer une faible quantité de poudre, de 0,5 gramme par exemple, sur une zone de travail ayant une petite surface, de 3 à 20 cm² par exemple.

Lorsqu'aucune vibration n'est appliquée au réservoir, le tamis permet de retenir les grains de poudre dans le réservoir en favorisant le voûtage des grains de poudre. Autrement dit, en l'absence de vibrations, le tamis favorise la formation de voûtes de grains de poudre à l'intérieur du réservoir, empêchant ainsi l'écoulement des grains de poudre. Lorsque des vibrations sont appliquées au réservoir, les voûtes s'effondrent et les grains de poudre passent au travers du tamis avec un débit limité par le maillage du tamis, ce qui permet de délivrer une très faible quantité de poudre, de 0,5 gramme par exemple, avec une précision de 0,02 gramme.

Grâce au montage du réservoir sur un capteur de pesage, il est possible de gérer au mieux le remplissage de ce réservoir depuis une alimentation en poudre.

L'invention prévoit aussi que :
- le maillage du tamis est compris entre 30 et 300 micromètres,
- la surface du tamis est comprise entre 3 et 20 cm²,
- la forme et la surface du tamis sont identiques à la forme et à la surface de la zone de travail,
- le tamis prend la forme d'un disque,
- le réservoir étant monté sur une lame ressort, le dispositif vibrant est monté sur le réservoir,
- un tamis étant monté sur un réservoir via une bague comprenant un épaulement retenant le tamis, la section de l'épaulement retenant le tamis diminue progressivement en s'éloignant du tamis,
- l'ouverture de distribution de poudre du réservoir est équipée d'un élément d'obturation,
- la zone de travail étant fixe, le réservoir est monté mobile entre une position dans laquelle il se situe au-dessus de la zone de travail et une position dans laquelle il ne situe pas au-dessus de la zone de travail,
- la machine comprend un dispositif de compactage de la couche de poudre déposée par le dispositif de dépôt sur la zone de travail,
- le dispositif de dépôt d'une couche de poudre comprend plusieurs réservoirs aptes à être positionnés au-dessus d'une zone de travail, chaque réservoir étant équipé d'un tamis et d'un dispositif vibrant.

L'invention couvre aussi un procédé de fabrication additive par dépôt de lit de poudre, selon la rendication 12, mis en oeuvre avec la machine selon l'invention et son dispositif de dépôt d'une couche de poudre.

Dans le procédé selon l'invention, le dépôt d'une couche de poudre sur la zone de travail est effectué en positionnant le réservoir au-dessus de la zone de travail puis en appliquant des vibrations au réservoir pendant que ce réservoir se situe au-dessus de la zone de travail, ou en effectuant plusieurs dépôts successifs et juxtaposés depuis différentes positions complémentaires prises par le réservoir au-dessus d'une zone de travail, des vibrations étant appliquées au réservoir lorsqu'il se situe sur chacune de ces positions complémentaires, ou en utilisant le réservoir et son tamis pour déposer de la poudre sous forme d'un cordon à côté de la zone de travail de la machine et devant un dispositif d'étalement de poudre.

D'autres caractéristiques et avantages de l'invention apparaîtront dans la description qui va suivre. Cette description, donnée à titre d'exemple et non limitative, se réfère aux dessins joints en annexe sur lesquels :
- la figure 1 est une vue de face schématique d'une machine de fabrication additive selon l'invention, avec un dispositif de dépôt d'une couche de poudre en position au-dessus d'une zone de travail de la machine,
- la figure 2 est une vue de face schématique d'une machine de fabrication additive selon l'invention, avec un dispositif de dépôt d'une couche de poudre qui n'est pas au-dessus d'une zone de travail de la machine,
- la figure 3 est une vue de dessus schématique d'une machine de fabrication additive selon l'invention avec plusieurs zones de travail et plusieurs réservoirs permettant de déposer une couche de poudre,
- la figure 4 est une vue en éclaté d'une première variante d'un dispositif de dépôt d'une couche de poudre d'une machine de fabrication additive selon l'invention,
- la figure 5 est une vue en coupe d'une première variante d'un dispositif de dépôt d'une couche de poudre d'une machine de fabrication additive selon l'invention,
- la figure 6 est une vue en coupe d'une seconde variante d'un dispositif de dépôt d'une couche de poudre d'une machine de fabrication additive selon l'invention, et
- la figure 7 est une vue de détail du montage d'un tamis en partie basse d'un réservoir d'un dispositif de dépôt d'une couche de poudre d'une machine de fabrication additive selon l'invention,
- la figure 8 est une vue en perspective d'une seconde variante de montage d'un réservoir mobile sur un capteur de pesage dans un dispositif de dépôt d'une couche de poudre d'une machine de fabrication additive selon l'invention,
- la figure 9 est une vue en coupe d'une seconde variante de montage d'un réservoir mobile sur un capteur de pesage dans un dispositif de dépôt d'une couche de poudre d'une machine de fabrication additive selon l'invention.

L'invention est relative à une machine de fabrication additive par dépôt de lit de poudre. La fabrication additive par dépôt de lit de poudre est un procédé de fabrication additif dans lequel une ou plusieurs pièces sont fabriquées par la consolidation sélective de différentes couches de poudre de fabrication additive superposées les unes sur les autres.

Dans un procédé de fabrication additive par dépôt de lit de poudre, une première couche de poudre est déposée sur un support tel un plateau, puis consolidée sélectivement selon une première section horizontale de la ou des pièces à fabriquer. Puis, une deuxième couche de poudre est déposée sur la première couche de poudre qui vient d'être consolidée et cette deuxième couche de poudre est consolidée sélectivement, et ainsi de suite jusqu'à la dernière couche de poudre utile à la fabrication de la dernière section horizontale de la ou des pièces à fabriquer.

La consolidation est dite sélective car seules des zones des couches de poudre correspondant à des sections de pièces à fabriquer sont consolidées. La consolidation est par exemple effectuée par fusion totale ou partielle (frittage) des grains de poudre à l'aide d'un ou plusieurs faisceaux laser.

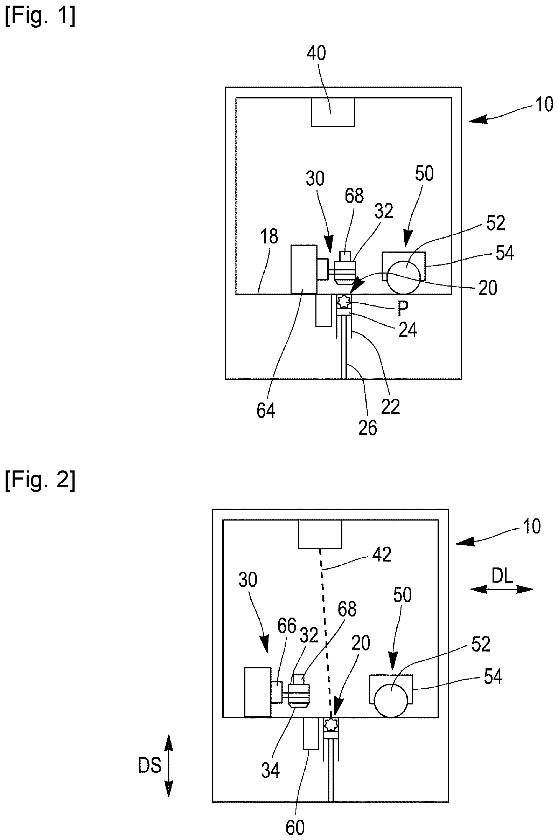

Comme l'illustrent les figures 1 à 3, la machine 10 de fabrication additive selon l'invention comprend une ou plusieurs zones de travail 20 permettant de recevoir une superposition de différentes couches de poudre, un dispositif de dépôt 30 d'une couche de poudre sur une zone de travail, et une source de consolidation 40 permettant de consolider de manière sélective chaque couche de poudre déposée sur une zone de travail 20.

Une zone de travail 20 est par exemple prévue dans un plan de travail 18 de la machine. Une zone de travail 20 est par exemple située dans une enceinte de fabrication 16 fermée de la machine. Le plan de travail 18 est par exemple horizontal. Une zone de travail 20 est par exemple définie par une chemise de fabrication 22 et un plateau de fabrication 24. Par exemple, une chemise 22 s'étend verticalement sous le plan de travail 18 et elle débouche dans le plan de travail 18. Le plateau de fabrication 24 coulisse verticalement à l'intérieur de la chemise de fabrication 22 sous l'effet d'un actionneur 26 tel un vérin. Comme illustré par les figures 1 et 2, le plan de travail 18 et la chemise 22 peuvent être montés fixes, et le plateau de fabrication 24 peut se déplacer en translation verticale dans la chemise 22 sous l'effet du vérin 26. En variante (non illustrée), le plateau de fabrication 24 est monté fixe, et un ou plusieurs vérins permettent de déplacer le plan de travail 18 et la chemise 22 en translation verticale par rapport au plateau.

Le dispositif de dépôt 30 d'une couche de poudre comprend un ou plusieurs réservoirs 32 de poudre aptes à être positionnés au-dessus d'une zone de travail 20. Une ouverture de distribution 34 de poudre est prévue en partie basse d'un réservoir 32.

La source de consolidation 40 est par exemple une source laser émettant au moins un faisceau laser 42, ce faisceau laser 42 permettant de fusionner de manière sélective une couche de poudre de fabrication additive déposée sur une zone de travail 20. En variante, plusieurs faisceaux 42 peuvent être émis par plusieurs sources laser, comme des diodes laser par exemple. Toujours en variante, un faisceau 42 peut être un faisceau d'électrons émis par un canon à électrons. Un ou des faisceaux laser peuvent aussi être combinés à un ou des faisceaux d'électrons pour effectuer la consolidation sélective de chaque couche de poudre.

Afin de permettre une consolidation sélective d'une couche de poudre selon des trajectoires correspondant à la section de la ou des pièces à fabriquer, une source de consolidation 40 est associée à des moyens de déplacement et de contrôle du ou des faisceaux 42 et/ou à des moyens de déplacement de cette source. Par exemple, des miroirs et des lentilles optiques sont utilisés pour déplacer le sport d'un faisceau laser et modifier sa focalisation, des électrodes et des bobines électromagnétiques sont utilisées pour déplacer un faisceau d'électron et contrôler sa focalisation, et des actionneurs mécaniques permettent de déplacer une ou des sources de consolidation 40 au-dessus d'une ou plusieurs zones de travail 20.

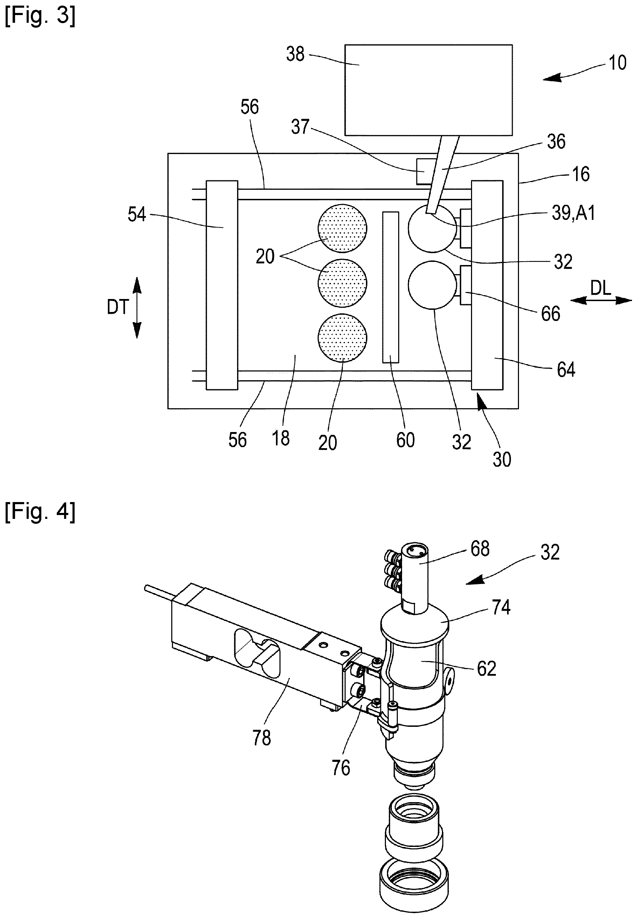

Afin de compacter chaque couche de poudre déposée sur une zone de travail 20 par le dispositif de dépôt 30, la machine de fabrication additive comprend un dispositif de compactage 50. Ce dispositif de compactage 50 prend la forme d'une raclette ou d'un rouleau 52 par exemple monté sur un chariot 54. Ce chariot 54 est monté mobile en translation dans une direction longitudinale DL au-dessus du plan de travail 18 et au-dessus d'au moins une zone de travail 20. La direction longitudinale DL est parallèle au plan de travail 18. La direction longitudinale DL est perpendiculaire à la direction de superposition DS des couches de poudre sur la zone de travail 20. La direction de superposition DS des couches est l'axe suivant lequel les couches sont superposées les unes sur les autres. Cette direction de superposition DS est perpendiculaire au plan de chaque couche de poudre. Le plan de chaque couche de poudre et le plan de travail 18 étant par exemple des plans horizontaux, l'axe de superposition AS est par exemple vertical. Comme illustré par la figure 3, le chariot 54 est par exemple monté sur des rails 56 via des galets ou des patins. Afin d'être entraîné en translation dans la direction longitudinale DL, le chariot 54 comprend par exemple une motorisation embarquée. Alternativement, le chariot 54 du dispositif de compactage 50 peut être mis en mouvement par un moteur monté fixe dans la machine 10 et relié au chariot via un système de transmission de mouvement tels des poulies et une courroie.

La poudre pouvant être déposée en excès sur une zone de travail 20, un bac de collecte 60 de poudre peut être prévu dans le plan de travail 18 pour collecter l'excédent de poudre déposé sur la zone de travail et repoussé par le dispositif de compactage 50 lors de son passage au-dessus d'une zone de travail.

Comme le montre la figure 3, la machine selon l'invention peut comprendre plusieurs zones de travail 20 et/ou le dispositif de dépôt 30 d'une couche de poudre peut comprendre plusieurs réservoirs 32 aptes à être positionnés au-dessus d'une zone de travail, chaque réservoir étant équipé d'un tamis et d'un dispositif vibrant. En ayant plusieurs réservoirs, le dispositif de dépôt permet de fabriquer une ou des pièces avec différentes poudres de fabrication additive, et donc par exemple en associant différents matériaux dans une même pièce. En ayant plusieurs zones de travail et plusieurs réservoirs, la machine selon l'invention permet par exemple de fabriquer simultanément des pièces avec différentes poudres de fabrication additive, et donc dans différents matériaux. Dans une telle configuration, il peut aussi être prévu plusieurs bacs de collecte 60 pour éviter de mélanger les excédents de poudre collectés.

Comme illustré en figure 3, une chemise de fabrication 22 peut être cylindrique. Dans ce cas, la zone de travail 20 est circulaire. Toutefois, une zone de travail peut aussi offrir une surface de travail annulaire, polygonale, ellipsoïdale, ou de toute autre forme adaptée à la géométrie des pièces à fabriquer.

Un réservoir 32 peut contenir suffisamment de poudre pour un cycle entier de fabrication additive. Toutefois, le dispositif de dépôt 30 peut aussi comprendre au moins une arrivée de poudre 36 permettant de délivrer de la poudre au-dessus du plan de travail 18 afin d'alimenter en poudre un réservoir 32 avant ou pendant un cycle de fabrication additive.

Dans le cas où la machine comprend plusieurs zones de travail et/ou plusieurs réservoirs, il peut être prévu plusieurs arrivées de poudre 36 délivrant différentes poudres de fabrication additive.

Une arrivée de poudre 36 prend la forme d'une goulotte ou d'un tube relié à un réservoir principal 38 de poudre. Une arrivée de poudre 36 est par exemple montée fixe au-dessus du plan de travail 18. En variante, une arrivée de poudre 36 peut aussi être montée mobile au-dessus du plan de travail 18. L'extrémité libre 39 de l'arrivée de poudre 36 forme un point d'alimentation A1 en poudre au-dessus du plan de travail 18. Avantageusement, une arrivée de poudre 36 est inclinée par rapport à un plan horizontal afin que la poudre s'écoule par gravité dans l'arrivée de poudre 36. En complément, une arrivée de poudre 36 peut être équipée d'un dispositif 37 permettant de contrôler le débit de poudre délivré par le point d'alimentation A1. Ce dispositif de contrôle de débit 37 peut être un dispositif vibrant et/ou un dispositif à clapet.

Afin de pouvoir remplir un réservoir 32 avec une arrivée de poudre 36, un réservoir 32 comprend une ouverture de remplissage 62. Cette ouverture de remplissage est par exemple prévue en partie supérieure d'un réservoir 32, comme le montrent les figures 4 à 6. Cette ouverture de remplissage 62 permet d'introduire l'extrémité libre 39 d'une arrivée de poudre 36 formant un point d'alimentation A1 en poudre à l'intérieur d'un réservoir 32.

Selon l'invention, un réservoir 32 est apte à être positionné au-dessus d'une zone de travail 20.

Dans une première variante illustrée par les figures 1 à 3, une zone de travail est fixe dans la machine et un réservoir 32 est monté mobile entre une position dans laquelle il se situe au-dessus d'une zone de travail 20, illustrée en figure 1, et une position dans laquelle il ne situe pas au-dessus de cette zone de travail, illustrée par les figures 2 et 3. Par exemple, un réservoir 32 de poudre est monté mobile en translation dans la direction longitudinale DL au-dessus d'une zone de travail 20. En complément, un réservoir 32 peut aussi être monté mobile dans une direction transversale DT parallèle au plan de travail 18 et perpendiculaire à la direction longitudinale DL. La direction transversale DT est perpendiculaire à la direction de superposition DS des couches de poudre sur la zone de travail 20.

Pour être mobile en translation dans la direction longitudinale DL au-dessus d'une zone de travail 20, un réservoir 32 est par exemple monté sur un chariot 64 guidé par les rails 56 et entraîné par un moteur électrique embarqué ou déporté à l'extérieur de l'enceinte de fabrication.

Pour sa mobilité dans une direction transversale DT parallèle au plan de travail 18 et perpendiculaire à la direction longitudinale DL, un réservoir 32 est par exemple monté sur une navette 66 guidée et entraînée en translation dans la direction transversale DT sur le chariot 64, par exemple via un rail et une courroie entraînée par un moteur électrique. La mobilité d'un réservoir 32 dans la direction transversale DT facilite par exemple l'alimentation en poudre du réservoir depuis l'extrémité libre 39 d'une arrivée de poudre 36, et elle permet aussi d'effectuer le dépôt d'une couche de poudre sur la zone de travail par plusieurs dépôts successifs et juxtaposés depuis différentes positions complémentaires prises par le réservoir au-dessus d'une zone de travail.

Dans une autre variante non illustrée et ne faisant pas partie de l'invention, un réservoir 32 peut être monté fixe dans la machine. Dans ce cas, une zone de travail 20 est montée mobile de manière à pouvoir positionner un réservoir 32 au-dessus de cette zone de travail 20.

Selon l'invention, le dispositif de dépôt 30 d'une couche de poudre comprend un dispositif vibrant 68 permettant de soumettre un réservoir 32 à des vibrations, et l'ouverture de distribution 34 de poudre d'un réservoir est équipée d'un tamis 70, visible sur les figures 4, 7 et 9.

Le tamis 70 est réalisé de manière à retenir les grains de poudre dans le réservoir 32 tant qu'aucune vibration n'est transmise au réservoir par le dispositif vibrant 68. A cet effet, le tamis 70 est réalisé de manière à ce que, en l'absence de vibrations issues du dispositif vibrant 68, les grains de poudre forment des voûtes à l'intérieur du réservoir 32.

Le dispositif vibrant 68 prend la forme d'un vibreur, par exemple pneumatique. Par exemple, un dispositif vibrant est monté sur un réservoir 32. Plus précisément, l'ouverture de distribution 34 de poudre se situant en partie basse d'un réservoir, le dispositif vibrant 68 peut être monté sur la partie supérieure d'un réservoir 32, comme l'illustrent les figures 4 à 6.

Un réservoir prenant la forme d'un corps creux 72, par exemple cylindrique et fermé par une paroi supérieure 74 en forme de voûte, le dispositif vibrant est monté sur la paroi supérieure de ce corps creux 72.

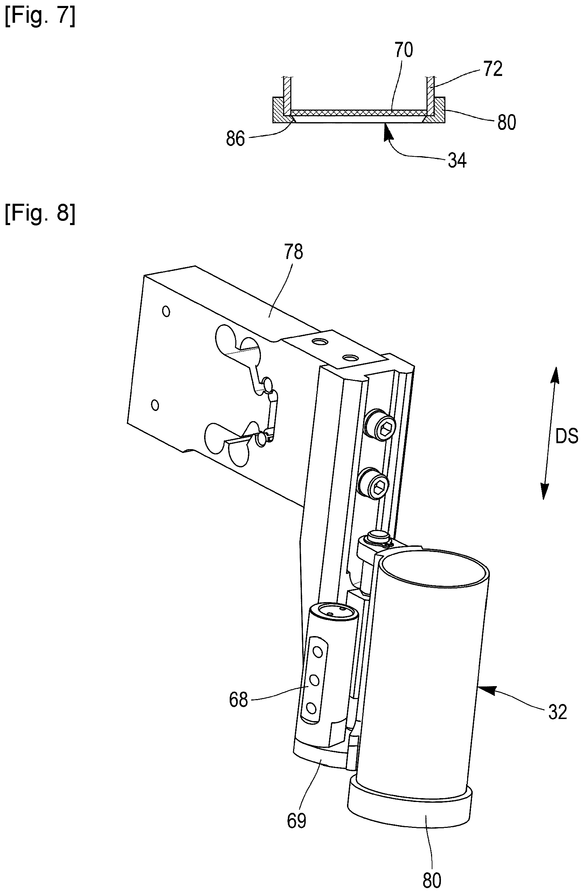

En variante, et comme l'illustre la figure 8, le dispositif vibrant 68 peut être juxtaposé au réservoir 32 et par exemple fixé sur un support 69 solidaire du réservoir 32.

Par exemple, le dispositif vibrant 68 transmet des vibrations comprises entre 50 Hz et 200 Hz à un réservoir 32, et plus précisément au corps 72 d'un réservoir, lorsque ce dispositif vibrant 68 prend la forme d'un vibreur pneumatique.

En complément d'un vibreur pneumatique, le dispositif vibrant 68 peut aussi comprendre un vibreur piézoélectrique permettant de transmettre des vibrations comprises entre 1kHz à 35 kHz à un réservoir 32, et plus précisément au corps 72 d'un réservoir.

Les poudres de fabrication additive, par exemple métalliques, ayant une granulométrie comprise entre quelques micromètres et 150 micromètres, le maillage d'un tamis 70 est compris entre 30 et 300 micromètres. Le maillage du tamis est adapté en fonction de la granulométrie et de la coulabilité de la poudre à distribuer de manière à favoriser la formation de voûtes par les grains de poudre à l'intérieur d'un réservoir lorsqu'aucune vibration n'est appliquée à ce réservoir.

La machine selon l'invention étant par exemple destinée à la fabrication de pièces de petites dimensions dans des alliages de matériaux coûteux comme le palladium, le platine, l'or ou l'argent ou dans des alliages de tungstène, de molybdène ou de tantale spécifiques à certaines applications (horlogerie par exemple), une zone de travail 20 est par exemple circulaire avec un diamètre compris entre 2 et 5 centimètres, et un tamis est par exemple circulaire avec une surface comprise entre 3 et 20 cm².

Pour donner un ordre d'idées, un réservoir 32 peut contenir entre 15 et 200 cm³ de poudre de fabrication additive, soit approximativement la quantité de poudre maximale pouvant être contenue au-dessus du plateau 24 dans la chemise de fabrication 22.

Pour simplifier le dépôt d'une couche de poudre sur la zone de travail et éviter de procéder à un dépôt par étalement de poudre et par excès, la forme et la surface du tamis 70 d'un réservoir 32 peuvent être sensiblement identiques à la forme et à la surface de la zone de travail 20, et donc à la forme et à la surface du plateau de fabrication 24. Lorsque la forme et la surface du tamis 70 d'un réservoir 32 sont sensiblement identiques à la forme et à la surface de la zone de travail 20, le dépôt d'une couche de poudre sur la zone de travail peut simplement être effectué en positionnant le réservoir au-dessus de la zone de travail puis en appliquant des vibrations au réservoir pendant que ce réservoir se situe au-dessus de la zone de travail.

Dans le cas où la surface d'une zone de travail est plus importante que celle du tamis 70 d'un réservoir 32, le dépôt d'une couche de poudre sur la zone de travail peut être effectué par plusieurs dépôts successifs et juxtaposés, à la manière d'une mosaïque. Ces dépôts successifs et juxtaposés sont effectués depuis différentes positions complémentaires prises par le réservoir au-dessus d'une zone de travail, des vibrations étant appliquées au réservoir lorsqu'il se situe sur chacune de ces positions complémentaires.

En complément du ou des dépôts de poudre directement effectués sur une zone de travail par un réservoir 32, il peut avantageusement être prévu un compactage de la poudre déposée avec un dispositif de compactage 50.

Bien entendu, un réservoir 32 avec un tamis 70 peut aussi être utilisé pour déposer de la poudre, par exemple sous forme d'un cordon, à côté d'une zone de travail et devant un dispositif d'étalement de poudre tel une raclette.

Dans le cas où le corps 72 d'un réservoir 32 est cylindrique, le tamis 70 prend la forme d'un disque.

Un tamis 70 prend par exemple la forme d'une grille découpée à la forme souhaitée dans un tissu métallique tissé à partir de fils métalliques, par exemple en acier inoxydable.

En variante, un tamis 70 peut prendre la forme d'une structure en treillis en trois dimensions, de type lattice, par exemple réalisée en fabrication additive. Une structure en treillis en trois dimensions du tamis permet d'utiliser des mailles plus grandes pour éviter les risques d'occlusion, tout en permettant d'augmenter la surface de freinage des grains de poudre, ce qui permet de mieux retenir les grains de poudre dans le réservoir 32 tant qu'aucune vibration n'est transmise au réservoir par le dispositif vibrant 68.

Comme illustré en figure 4 et dans une première variante, le dispositif vibrant 68 étant monté sur un réservoir 32, ce réservoir est monté sur une lame ressort 76. Cette lame ressort 76 relie le réservoir 32 à son support, tel un chariot 64, une navette 66 ou un capteur de pesage 78 visible en figure 4. Une lame ressort 76 permet d'amplifier l'amplitude des vibrations du réservoir lorsque le dispositif vibrant est actif.

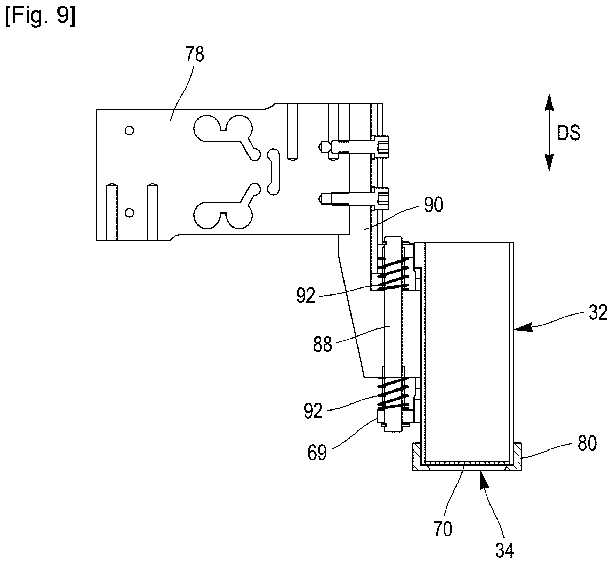

Selon l'invention, illustrée par les figures 8 et 9, le dispositif vibrant 68 et le réservoir 32 sont montés sur un premier support 69 monté coulissant par rapport à un capteur de pesage 78. Selon l'invention, le premier support 69 est monté coulissant par rapport au capteur de pesage 78 dans la direction de superposition DS des couches de poudre. Ainsi, le réservoir oscille principalement dans une direction perpendiculaire au plan du tamis 70, soit de préférence dans une direction verticale. Par exemple, un axe 88 est rapporté sur le capteur de pesage 78 à l'aide d'un second support 90, et le premier support 69 est monté coulissant sur cet axe 88. Afin de contrôler les oscillations du réservoir 32 et de ramener le réservoir vers une position stable de repos après l'application de vibrations, des ressorts 92 sont interposés entre le premier support 69 et le second support 88. Par exemple, les ressorts 92 sont montés sur l'axe 88.

Afin de connaître la quantité exacte de poudre déposée par un réservoir 32 et comme l'illustrent les figures 4, 8 et 9, un réservoir 32 est monté sur un capteur de pesage 78. Un capteur de pesage 78 permet de mesurer la masse du réservoir et de la poudre qu'il contient. Lorsque de la poudre est délivrée par le réservoir 32, le capteur de pesage 78 permet de mesurer la diminution de la masse de poudre présente dans le réservoir, et donc la quantité de poudre délivrée. Avantageusement, un capteur de pesage 78 permet de détecter un arrêt de l'écoulement de poudre ou une diminution anormale de la quantité de poudre déposée, par exemple dû à la formation d'un bouchon de poudre dans le réservoir ou à des agglomérats de poudre qui peuvent s'accumuler dans un réservoir 32 au fur et à mesure des cycles de fabrication. Un capteur de pesage 78 permet aussi de gérer le remplissage d'un réservoir 32 via une arrivée de poudre 36.

Par exemple, le fonctionnement du dispositif de contrôle de débit 37 d'une arrivée de poudre 36 est piloté grâce aux mesures effectuées par un capteur de pesage 78. A cet effet, la machine comprend une unité de contrôle (non illustrée) reliée au capteur de pesage 78 et au dispositif 37 de contrôle de débit.

Un capteur de pesage 78 est par exemple un capteur de pesage à jauge d'extensométrie. Un capteur de pesage 78 prend par exemple la forme d'un bras monté en flexion et équipé d'une jauge d'extensométrie.

En permettant de connaître précisément la quantité de poudre déposée, le montage du réservoir 32 sur un capteur de pesage permet d'optimiser la consommation de poudre, ce qui est par exemple indispensable lorsque la poudre contient un ou des métaux précieux.

Dans le cas où le dispositif de dépôt 30 d'une couche de poudre comprend plusieurs réservoirs 32 contenant différentes poudres de fabrication additive, le montage de chaque réservoir sur un capteur de pesage permet de maîtriser le ratio entre les quantités de différentes poudres déposées.

Dans le cas où un réservoir 32 est monté sur un chariot 64 via une navette 66, le capteur de pesage 78 relie le réservoir 32 à la navette 66, une lame ressort 76 pouvant être intercalée entre le réservoir 32 et le capteur de pesage 78.

En vue du montage d'un tamis 70 sur un réservoir 32, il est par exemple prévu une bague de montage 80.

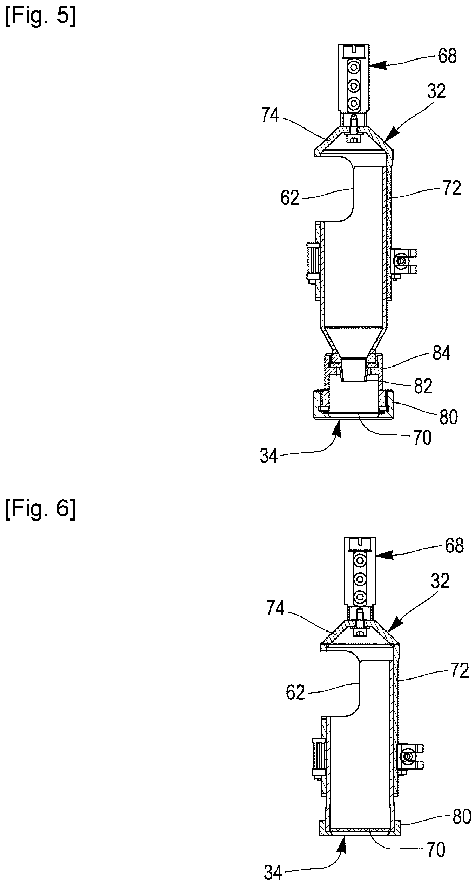

Dans une première variante illustrée en coupe en figure 5, l'ouverture de distribution 34 d'un réservoir 32 étant déjà équipée d'une buse 82, une extension 84 est montée sur le corps 72 du réservoir 32 et la bague de montage 80 du tamis est montée sur cette extension. Plus en détails, l'extension 84 est montée en partie basse du réservoir, sous la buse 82 déjà présente, et la bague de montage 80 du tamis est montée en partie basse de l'extension 84. Dans cette première variante, les voûtes de poudre qui se forment au-dessus du tamis se situent dans l'extension 84. Dans le cas où le corps 72 d'un réservoir 32 est cylindrique, l'extension 84 prend aussi la forme d'un corps cylindrique, et la bague de montage 80 est aussi cylindrique. Par exemple, l'extension 84 est vissée sur le corps 72 d'un réservoir 32. Ainsi, le réservoir 32 peut être utilisé avec un tamis 70 ou avec une buse 82 en retirant le tamis. Par exemple, la bague de montage 80 est vissée sur l'extension 84. Ainsi, la bague de montage 80 peut facilement être démontée pour changer le tamis 70 et adapter le maillage du tamis à une nouvelle poudre de granulométrie et/ou de coulabilité différente.

Dans une autre variante illustrée par les figures 6 à 9, l'ouverture de distribution 34 d'un réservoir 32 n'est pas équipée d'une buse 82, et la bague de montage 80 du tamis est montée directement sur le corps 72 du réservoir 32. Plus en détails, la bague de montage 80 est montée en partie basse du réservoir. Dans cette seconde variante, les voûtes de poudre qui se forment au-dessus du tamis se situent dans le corps 72 d'un réservoir 32. Dans le cas où le corps 72 d'un réservoir 32 est cylindrique, la bague de montage 80 est aussi cylindrique. Par exemple, la bague de montage 80 est vissée sur le corps 72. Ainsi, la bague de montage 80 peut facilement être démontée pour changer le tamis 70 et adapter le maillage du tamis à une nouvelle poudre de granulométrie et/ou de coulabilité différente.

Dans l'une ou l'autre des variantes de montage d'un tamis, et comme le montre en détail la figure 7, une bague 80 est un corps creux comprenant un épaulement 86 en partie inférieure. La section ouverte de l'épaulement est inférieure à celle du tamis 70 afin de retenir le tamis contre l'extension 84 ou le corps 72 d'un réservoir lorsque la bague est montée sur cette extension 84 ou ce corps 72.

Pour augmenter la quantité de poudre déposée en bordure extérieure du tamis, la section de l'épaulement 86 retenant le tamis diminue progressivement en s'éloignant du tamis.

Pour éviter toute distribution de poudre non souhaitée, l'ouverture de distribution 34 de poudre d'un réservoir 32 peut être équipée d'un élément d'obturation (non illustré) tel un clapet, un volet, une rondelle ou un diaphragme par exemple. Cet élément d'obturation peut être monté au-dessous d'un tamis 70 ou au-dessus du tamis et à l'intérieur du réservoir.

La présente invention couvre aussi un procédé de fabrication additive par dépôt de lit de poudre, selon la revendication 12. Ce procédé comprend une étape de dépôt d'une couche de poudre sur une zone de travail 20 réalisé en soumettant une certaine quantité de poudre à un tamisage et à des vibrations avec un réservoir 32 équipé d'un tamis 70 et d'un dispositif vibrant 68, et une étape de consolidation sélective de la couche de poudre déposée.

Selon ce procédé et dans une première variante, le dépôt d'une couche de poudre sur la zone de travail est effectué en positionnant le réservoir 32 au-dessus de la zone de travail 20 puis en appliquant des vibrations au réservoir pendant que ce réservoir se situe au-dessus de la zone de travail. Dans ce cas, la forme et la surface du tamis sont de préférence identiques à la forme et à la surface de la zone de travail.

Dans une deuxième variante du procédé selon l'invention, le dépôt d'une couche de poudre sur la zone de travail est réalisé en effectuant plusieurs dépôts successifs et juxtaposés depuis différentes positions complémentaires prises par le réservoir 32 au-dessus d'une zone de travail 20, des vibrations étant appliquées au réservoir lorsqu'il se situe sur chacune de ces positions complémentaires.

Dans une troisième variante du procédé selon l'invention, le dépôt d'une couche de poudre sur la zone de travail est effectué en utilisant le réservoir 32 et son tamis 70 pour déposer de la poudre sous forme d'un cordon à côté de la zone de travail de la machine et devant un dispositif d'étalement de poudre.

Dans le cas du dépôt d'un cordon de poudre avec le réservoir 32 et son tamis 70, le montage du réservoir sur un capteur de pesage permet d'asservir le déplacement du réservoir 32 et le fonctionnement du dispositif vibrant 68 à la quantité de poudre déposée et d'adapter la quantité de poudre déposée par exemple à la forme de la zone de travail, à une dépose partielle en fin de fabrication, ou à une dépose fractionnée, ou par exemple pour augmenter la quantité de poudre déposée aux extrémités du cordon de poudre.

Eventuellement, ce procédé de fabrication additive par dépôt de lit de poudre, selon une variante ne faisant pas partie de l'invention, peut aussi prévoir que la couche de poudre déposée par tamisage et vibrations est compactée avant d'être consolidée de manière sélective, par exemple avec un dispositif de compactage 50.

## Revendications

1. Machine (10) de fabrication additive par dépôt de lit de poudre, cette machine de fabrication additive comprenant une zone de travail (20) permettant de recevoir une superposition de différentes couches de poudre, un dispositif de dépôt (30) d'une couche de poudre sur la zone de travail, et une source de consolidation (40) permettant de consolider de manière sélective chaque couche de poudre déposée sur la zone de travail, le dispositif de dépôt d'une couche de poudre comprenant un réservoir (32) de poudre apte à être positionné au-dessus de la zone de travail, et une ouverture de distribution (34) de poudre étant prévue en partie basse du réservoir, le dispositif de dépôt d'une couche de poudre comprenant un dispositif vibrant (68) permettant de soumettre le réservoir à des vibrations, et l'ouverture de distribution (34) de poudre du réservoir étant équipée d'un tamis (70), la machine de fabrication additive est **caractérisée en ce que** le réservoir est monté sur un capteur de pesage, le dispositif vibrant et le réservoir étant montés sur un premier support (69) monté coulissant par rapport au capteur de pesage dans la direction de superposition (DS) des couches de poudre.

2. Machine (10) de fabrication additive par dépôt de lit de poudre selon la revendication 1, dans laquelle le maillage du tamis est compris entre 30 et 300 micromètres.

3. Machine (10) de fabrication additive par dépôt de lit de poudre selon l'une des revendications précédentes, dans laquelle la surface du tamis est comprise entre 3 et 20 cm².

4. Machine (10) de fabrication additive par dépôt de lit de poudre selon l'une des revendications précédentes, dans laquelle la forme et la surface du tamis sont identiques à la forme et à la surface de la zone de travail.

5. Machine (10) de fabrication additive par dépôt de lit de poudre selon l'une des revendications précédentes, dans laquelle le tamis prend la forme d'un disque.

6. Machine (10) de fabrication additive par dépôt de lit de poudre selon la revendication 1, dans laquelle, un axe (88) étant rapporté sur le capteur de pesage à l'aide d'un second support (90), le premier support (69) est monté coulissant sur cet axe (88) et des ressorts (92) sont interposés entre le premier support et le second support.

7. Machine (10) de fabrication additive par dépôt de lit de poudre selon l'une des revendications précédentes, dans laquelle, un tamis (70) étant monté sur un réservoir (32) via une bague (80) comprenant un épaulement (86) retenant le tamis, la section de l'épaulement (86) retenant le tamis diminue progressivement en s'éloignant du tamis.

8. Machine (10) de fabrication additive par dépôt de lit de poudre selon l'une des revendications précédentes, dans laquelle l'ouverture de distribution de poudre du réservoir est équipée d'un élément d'obturation.

9. Machine (10) de fabrication additive par dépôt de lit de poudre selon l'une des revendications précédentes, dans laquelle, la zone de travail étant fixe, le réservoir est monté mobile entre une position dans laquelle il se situe au-dessus de la zone de travail et une position dans laquelle il ne situe pas au-dessus de la zone de travail.

10. Machine (10) de fabrication additive par dépôt de lit de poudre selon l'une des revendications précédentes, comprenant un dispositif de compactage (50) de la couche de poudre déposée par le dispositif de dépôt sur la zone de travail.

11. Machine (10) de fabrication additive par dépôt de lit de poudre selon l'une des revendications précédentes, dans laquelle le dispositif de dépôt (30) d'une couche de poudre comprend plusieurs réservoirs (32) aptes à être positionnés au-dessus d'une zone de travail, et dans laquelle chaque réservoir est équipé d'un tamis (70) et d'un dispositif vibrant (68).

12. Procédé de fabrication additive par dépôt de lit de poudre, ce procédé mettant en oeuvre le dispositif de dépôt d'une couche de poudre d'une machine de fabrication additive selon l'une des revendications précédentes.

13. Procédé de fabrication additive par dépôt de lit de poudre selon la revendication 12, dans lequel le dépôt d'une couche de poudre sur la zone de travail est effectué en positionnant le réservoir au-dessus de la zone de travail puis en appliquant des vibrations au réservoir pendant que ce réservoir se situe au-dessus de la zone de travail, ou en effectuant plusieurs dépôts successifs et juxtaposés depuis différentes positions complémentaires prises par le réservoir au-dessus d'une zone de travail, des vibrations étant appliquées au réservoir lorsqu'il se situe sur chacune de ces positions complémentaires, ou en utilisant le réservoir et son tamis pour déposer de la poudre sous forme d'un cordon à côté de la zone de travail de la machine et devant un dispositif d'étalement de poudre.

## Patentansprüche

1. Maschine (10) zur generativen Fertigung durch Aufbringen eines Pulverbetts, wobei diese Maschine zur generativen Fertigung einen Arbeitsbereich (20), der es ermöglicht, eine Überlagerung von verschiedenen Pulverschichten aufzunehmen, eine Vorrichtung zum Aufbringen (30) einer Pulverschicht auf den Arbeitsbereich und eine Verfestigungsquelle (40), die es ermöglicht, jede auf den Arbeitsbereich aufgebrachte Pulverschicht selektiv zu verfestigen, umfasst, wobei die Vorrichtung zum Aufbringen einer Pulverschicht einen Pulverbehälter (32) umfasst, der geeignet ist, über dem Arbeitsbereich positioniert zu werden, und wobei eine Pulverausgabeöffnung (34) im unteren Teil des Behälters vorgesehen ist, wobei die Vorrichtung zum Aufbringen einer Pulverschicht eine vibrierende Vorrichtung (68) umfasst, die es ermöglicht, den Behälter Vibrationen zu unterziehen, und wobei die Pulverausgabeöffnung (34) des Behälters mit einem Sieb (70) ausgestattet ist, wobei die Maschine zur generativen Fertigung **dadurch gekennzeichnet ist, dass** der Behälter an einem Wägesensor montiert ist, wobei die vibrierende Vorrichtung und der Behälter an einer ersten Halterung (69) montiert sind, die in Bezug auf den Wägesensor in der Überlagerungsrichtung (DS) der Pulverschichten verschieblich montiert ist.

2. Maschine (10) zur generativen Fertigung durch Aufbringen eines Pulverbetts nach Anspruch 1, bei der die Maschenweite des Siebs zwischen 30 und 300 Mikrometer beträgt.

3. Maschine (10) zur generativen Fertigung durch Aufbringen eines Pulverbetts nach einem der vorhergehenden Ansprüche, bei der die Fläche des Siebs zwischen 3 und 20 cm² beträgt.

4. Maschine (10) zur generativen Fertigung durch Aufbringen eines Pulverbetts nach einem der vorhergehenden Ansprüche, bei der die Form und die Fläche des Siebs identisch mit der Form und der Fläche des Arbeitsbereichs sind.

5. Maschine (10) zur generativen Fertigung durch Aufbringen eines Pulverbetts nach einem der vorhergehenden Ansprüche, bei der das Sieb die Form einer Scheibe annimmt.

6. Maschine (10) zur generativen Fertigung durch Aufbringen eines Pulverbetts nach Anspruch 1, bei der, wenn eine Achse (88) mithilfe einer zweiten Halterung (90) an den Wägesensor angesetzt ist, die erste Halterung (69) verschieblich an dieser Achse (88) montiert ist und Federn (92) zwischen die erste Halterung und die zweite Halterung gesetzt sind.

7. Maschine (10) zur generativen Fertigung durch Aufbringen eines Pulverbetts nach einem der vorhergehenden Ansprüche, bei der, wenn ein Sieb (70) an einem Behälter (32) über einen Ring (80) montiert ist, der eine das Sieb haltende Schulter (86) umfasst, der Querschnitt der das Sieb haltenden Schulter (86) mit der Entfernung vom Sieb zunehmend abnimmt.

8. Maschine (10) zur generativen Fertigung durch Aufbringen eines Pulverbetts nach einem der vorhergehenden Ansprüche, bei der die Pulverausgabeöffnung des Behälters mit einem Verschlusselement ausgestattet ist.

9. Maschine (10) zur generativen Fertigung durch Aufbringen eines Pulverbetts nach einem der vorhergehenden Ansprüche, bei der, wenn der Arbeitsbereich feststehend ist, der Behälter beweglich zwischen einer Position, in der er sich über dem Arbeitsbereich befindet, und einer Position, in der er sich nicht über dem Arbeitsbereich befindet, montiert ist.

10. Maschine (10) zur generativen Fertigung durch Aufbringen eines Pulverbetts nach einem der vorhergehenden Ansprüche, umfassend eine Vorrichtung zur Verdichtung (50) der von der Vorrichtung zum Aufbringen auf den Arbeitsbereich aufgebrachten Pulverschicht.

11. Maschine (10) zur generativen Fertigung durch Aufbringen eines Pulverbetts nach einem der vorhergehenden Ansprüche, bei der die Vorrichtung zum Aufbringen (30) einer Pulverschicht mehrere Behälter (32) umfasst, die geeignet sind, über einem Arbeitsbereich positioniert zu werden, und bei der jeder Behälter mit einem Sieb (70) und mit einer vibrierenden Vorrichtung (68) ausgestattet ist.

12. Verfahren zur generativen Fertigung durch Aufbringen eines Pulverbetts, wobei dieses Verfahren die Vorrichtung zum Aufbringen einer Pulverschicht einer Maschine zur generativen Fertigung nach einem der vorhergehenden Ansprüche einsetzt.

13. Verfahren zur generativen Fertigung durch Aufbringen einer Pulverschicht nach Anspruch 12, bei dem das Aufbringen einer Pulverschicht auf den Arbeitsbereich vorgenommen wird, indem der Behälter über dem Arbeitsbereich positioniert wird, dann Vibrationen auf den Behälter angewandt werden, während sich dieser Behälter über dem Arbeitsbereich befindet, oder indem mehrere aufeinander folgende und nebeneinander liegende Aufbringungen aus verschiedenen von dem Behälter über einem Arbeitsbereich eingenommenen ergänzenden Positionen vorgenommen werden, Vibrationen auf den Behälter angewandt werden, wenn er sich in jeder dieser ergänzenden Positionen befindet, oder indem der Behälter und sein Sieb verwendet werden, um Pulver in Form einer Raupe neben dem Arbeitsbereich der Maschine und vor einer Vorrichtung zum Ausbreiten von Pulver aufzubringen.

## Claims

1. Powder bed fusion additive manufacturing machine (10), this additive manufacturing machine comprising a working area (20) able to receive a superposition of different layers of powder, a device (30) for depositing a layer of powder onto the working area and a consolidation source (40) used to selectively consolidate each layer of powder deposited onto the working area, the device for depositing a layer of powder comprising a powder reservoir (32) able to be positioned above the working area, and a powder distribution opening (34) being provided in the bottom part of the reservoir, the device for depositing a layer of powder comprising a vibrating device (68) able to subject the reservoir to vibrations, and the powder distribution opening (34) of the reservoir being equipped with a sieve (70), the additive manufacturing machine is **characterized in that** the reservoir is mounted on a weighing sensor, the vibrating device and the reservoir being mounted on a first support (69) mounted with the ability to slide with respect to the weighing sensor in the direction of superposition (DS) of the layers of powder.

2. Powder bed fusion additive manufacturing machine (10) according to Claim 1, wherein the mesh size of the sieve is comprised between 30 and 300 microns.

3. Powder bed fusion additive manufacturing machine (10) according to one of the preceding claims, wherein the surface area of the sieve is comprised between 3 and 20 cm².

4. Powder bed fusion additive manufacturing machine (10) according to one of the preceding claims, wherein the shape and surface area of the sieve are identical to the shape and surface area of the working area.

5. Powder bed fusion additive manufacturing machine (10) according to one of the preceding claims, wherein the sieve takes the form of a disc.

6. Powder bed fusion additive manufacturing machine (10) according to Claim 1, wherein, with a spindle (88) being attached to the weighing sensor using a second support (90), the first support (69) is mounted with the ability to slide along this spindle (88) and springs (92) are interposed between the first support and the second support.

7. Powder bed fusion additive manufacturing machine (10) according to one of the preceding claims, wherein, with a sieve (70) being mounted on a reservoir (32) via a ring (80) having a shoulder (86) to hold the sieve, the cross section of the sieve-holding shoulder (86) decreases progressively in the direction away from the sieve.

8. Powder bed fusion additive manufacturing machine (10) according to one of the preceding claims, wherein the powder distribution opening of the reservoir is fitted with a shut-off element.

9. Powder bed fusion additive manufacturing machine (10) according to one of the preceding claims, wherein, with the working area being fixed, the reservoir is mounted with the ability to move between a position in which it is situated above the working area and a position in which it is not situated above the working area.

10. Powder bed fusion additive manufacturing machine (10) according to one of the preceding claims, comprising a compaction device (50) for compacting the layer of powder deposited by the depositing device on the working area.

11. Powder bed fusion additive manufacturing machine (10) according to one of the preceding claims, wherein the device (30) for depositing a layer of powder comprises several reservoirs (32) which are able to be positioned above a working area, and wherein each reservoir is equipped with a sieve (70) and with a vibrating device (68).

12. Powder bed fusion additive manufacturing method, this method employing the device for depositing a layer of powder of an additive manufacturing machine according to one of the preceding claims.

13. Powder bed fusion additive manufacturing method according to Claim 12, wherein a layer of powder is deposited on the working area by positioning the reservoir above the working area and then applying vibrations to the reservoir while the reservoir is situated above the working area, or by making several successive and juxtaposed deposits from various complementary positions adopted by the reservoir above a working area, vibrations being applied to the reservoir when it is situated over each one of these complementary positions, or by using the reservoir and its sieve to deposit powder in the form of a line next to the working area of the machine and in front of a powder spreading device.
